# DEMANDE DE BREVET EUROPEEN

(11) **EP 1 056 302 A1**
(43) Date de publication de la demande: **29.11.2000**
(21) Numéro de dépôt: 00401440.3
(22) Date de dépôt: 24.05.2000
(51) Int. Cl.: H04Q 7/26, H04B 7/26

(54) **Méthode de synchronisation de bases radio d'un réseau local de radiotéléphonie et base utilisant la méthode**

(30) Priorité: 28.05.1999 FR 9906754
(71) Demandeur: SAGEM SA, 75116 Paris (FR)
(72) Inventeur: Lafourcade Jumembo, Alec, 92300 Levallois (FR)
(74) Mandataire: Bloch, Gérard

(57) **Abrégé**

Le réseau local de radiotéléphonie comporte une pluralité de bases radio (1-6) comprenant chacune des moyens de liaison (11, 21) avec un réseau téléphonique externe (30) et des moyens radio (13) de liaison avec des combinés (25-27), une première base (2) étant agencée pour fonctionner comme combiné d'une deuxième base (1) et synchroniser les autres bases (3-6) sur la deuxième base (1).

## Description

Un réseau téléphonique local est constitué, de façon classique, par un ensemble de postes téléphoniques qui sont reliés individuellement à un autocommutateur permettant les communications internes et externes. Un tel réseau représente un investissement important en infrastructure, puisqu'il faut passer un grand nombre de lignes locales de raccordement des postes.

La demanderesse s'est posé le problème du remplacement des lignes locales par des liaisons radio, en prévoyant une pluralité de bases radio reliées chacune au réseau téléphonique commuté RTC et formant ainsi une grappe de petits autocommutateurs.

Cependant, une telle solution présente, a priori, des limitations.

Tout d'abord, un combiné radio doit pouvoir être utilisé partout dans le réseau local, c'est-à-dire pouvoir être suivi (roaming) pour être atteint par la base la plus proche lorsqu'il est appelé. En outre, lorsqu'une communication est établie à travers une base, celle-ci doit pouvoir passer la main (handover) à une autre base en lui transférant la communication si le combiné sort de son champ.

Comme les bases ne sont pas synchronisées entre elles, de tels transferts de communication d'une base à l'autre ne peuvent s'effectuer sans défaut. On ne peut pas non plus synchroniser une base par une autre car les bases ne peuvent communiquer qu'avec des combinés.

Ensuite, il se pose le problème de l'accès au réseau RTC. Une base ne comporte qu'un seul codec pour numériser les signaux vocaux provenant d'une ligne du réseau RTC et les transmettre par radio aux combinés, et inversement. Il peut donc se produire qu'un combiné ne puisse accéder au RTC ou être appelé depuis celui-ci, si la ligne RTC de la base considérée est déjà occupée. Ajouter d'autres codecs ne serait pas économiquement justifié.

La demanderesse propose la solution ci-dessous au problème posé, qui permet de s'affranchir des limites indiquées.

A cet effet, l'invention concerne tout d'abord un réseau local de radiotéléphonie comportant une pluralité de bases radio comprenant chacune des moyens de liaison avec un réseau téléphonique externe et des moyens radio de liaison avec des combinés, caractérisé par le fait qu'une première base est agencée pour fonctionner comme combiné d'une deuxième base et synchroniser les autres bases sur la deuxième base.

Ainsi, la première base sert à la fois de relais adaptateur, de commande de synchronisation, entre des bases non prévues pour des liaisons directes entre elles et sert de réserve, pour la deuxième base et les autres à portée radio, en moyens de liaison avec le réseau externe. La première base constitue un point central du réseau et sert ainsi de circuit de débordement pour les liaisons externes.

L'invention concerne aussi une base radio pour le réseau de radiotéléphonie de l'invention, comprenant des moyens de liaison à un réseau téléphonique extérieur et des moyens de liaison avec des combinés, caractérisée par le fait qu'elle comporte des moyens d'émission et des moyens de réception de signaux de balise de synchronisation.

L'invention sera mieux comprise à l'aide de la description suivante d'une forme de réalisation préférée du réseau local de radiotéléphonie de l'invention, en référence au dessin annexé sur lequel
- la figure 1 représente schématiquement le réseau local de radiotéléphonie, et
- la figure 2, formée des figures 2A, 2B et 2C, représente des trames DECT en fonction du temps t.

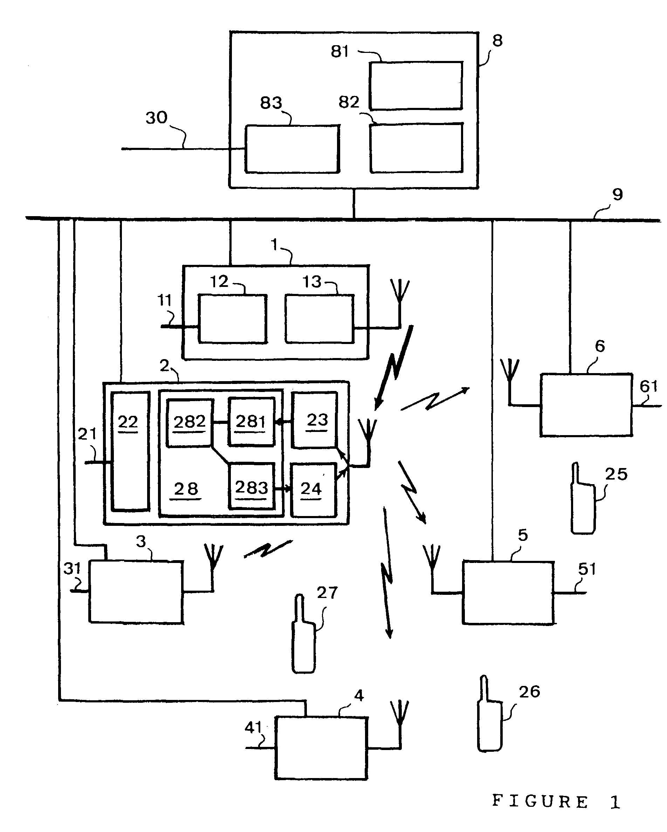

Le réseau local de radiotéléphonie représenté sur la figure 1 comporte une pluralité de bases radio 1 à 6, ici à la norme DECT, et une autre pluralité de postes téléphoniques sans fil 25-27, ici des combinés mobiles. Les bases 1-6 sont reliées à des lignes respectives 11, 21, 31, 41, 51 et 61 reliées chacune au réseau téléphonique commuté RTC par un équipement de ligne classique comme ceux référencés 12 et 22 dans les bases respectives 1 et 2, qui contient des circuits de prise de ligne, de numérotation et un codec. Chaque base 1-6 comporte des circuits radio, comme ceux référencés 13, de liaison birectionnelle avec les combinés 25-27, qui, eux-mêmes, ont des circuits radio du même type. Dans la base 2, les références 23 et 24 correspondent à un ensemble de circuits radio semblable aux circuits 13, les circuits 23 étant récepteurs et les circuits 24 émetteurs.

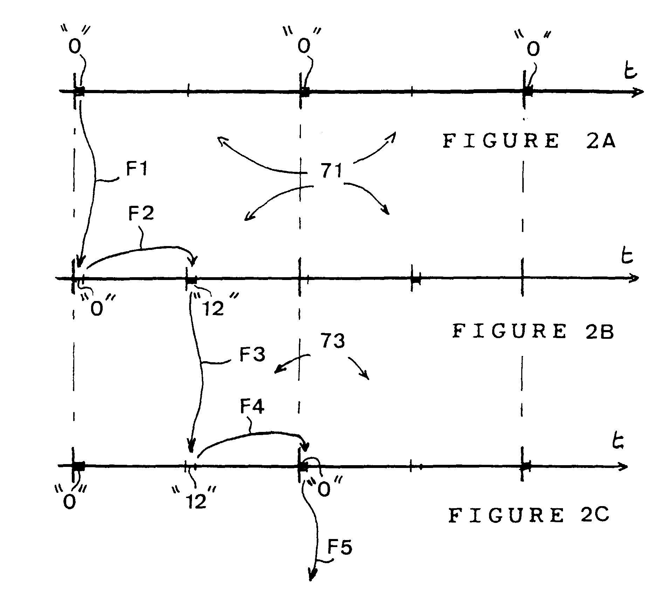

Les circuits récepteurs 23 sont reliés en sortie à un circuit 281 de réception et de reconnaissance de signaux balise de synchronisation trame provenant de la base 1 et commandant, à travers un circuit temporisateur 282, un circuit 283 d'émission d'autres signaux balise de synchronisation trame, appelés pseudo-balise. Le circuit 283 commande à cet effet les circuits 24. Les circuits 281, 282 et 283 appartiennent à une unité centrale 28, dont le circuit 282 est un séquenceur de gestion des voies temporelles de trame DECT (fig. 2), comportant un compteur de voies temporelles dans chaque trame pour commander l'émission et la réception de signaux dans les voies temporelles, d'émission et de réception attribuées à la base 2. Le compteur ci-dessus, avançant au rythme des voies temporelles, a ainsi la fonction de temporisateur indiquée ci-dessus.

Un bus de transmission de données d'information 9 relie les bases 1-6 à des circuits 8 de gestion du réseau local, qui assurent en particulier la gestion de la poursuite ou suivi (roaming) des combinés 25-27, lorsqu'ils passent d'une zone de couverture radio d'une base à une autre, et du transfert entre bases 1-6, de communications établies (handover).

On rappellera que la norme DECT prévoit des trames de 24 voies temporelles pour les communications radio entre une base et les combinés, les douze premières voies temporelles, de rangs "0" à "11" étant réservées aux émissions de la base et les douze dernières, de rangs "12" à "23" aux émissions des combinés. Plusieurs trames peuvent en outre être émises simultanément et en synchronisme sur plusieurs fréquences porteuses. En outre, une base peut émettre des signaux de signalisation dans la voie de rang "0", dite balise, à destination des combinés. Deux combinés comme 25, 26 reliés à une même base comme 5 peuvent communiquer entre eux en interphonie, en codant numériquement la phonie et l'émettant vers la base 5 dans une voie temporelle attribuée par celle-ci, et en décodant les signaux numériques de phonie provenant de l'autre combiné à travers la base 5. Cette dernière sert simplement de commutateur temporel et fréquentiel (changement éventuel de porteuse pour la voie temporelle utilisée) et ne comporte pas de codec à ce niveau puisque ce sont les combinés 25-26 qui assurent cette fonction. Il n'y a donc, dans une base 1-6, que le codec de ligne RTC (12).

Parmi la pluralité de bases 1-6, deux de celles-ci diffèrent, par leur fonction et/ou leur structure, des autres bases 3-6.

La base 1 est une base maître qui émet par les circuits radio 13, sur la voie balise "0", les signaux de synchronisation indiqués plus haut, sur une porteuse à fréquence f1. La figure 2A représente deux trames DECT 71 de la base 1, avec la voie balise, de rang "0".

La base 2 fonctionne comme combiné de la base 1, en ce sens qu'elle est en réception pendant la première moitié de la trame DECT 71 et ne peut émettre que dans la seconde moitié de celle-ci. La transformation de la base 2 en combiné consiste donc à intervertir le séquencement entre les demi-trames d'émission et de réception. Les autres bases 1 et 3-6, par contre, émettent dans la première moitié de la trame DECT 71 et reçoivent dans la seconde.

De ce fait, la base 2, asservie en fréquence trame par la base 1 et asservissant de même les bases 3-6, forme un moyeu du réseau local, qui peut communiquer avec toutes les autres bases 1, 3-6, dans la mesure où elles sont à portée radio. Dans tous les cas, les bases 1 et 2 sont à portée radio l'une de l'autre. Les signaux de voie balise "0" de la trame 71, reçus par le circuit 23 de la base 2 et reconnus par le circuit 281 (flèche F1) sur la porteuse à fréquence déterminée f1, sont rediffusés par les circuits 24 (flèche F3) avec un retard d'une demi-trame (flèche F2) en voie "12", retard dû au circuit temporisateur 282 qui commande le circuit 283 avec un tel retard. Cette rediffusion s'effectue sous forme de signaux de pseudo-balise de synchronisation des bases 3-6, ici sur une autre porteuse, à fréquence f2. Le circuit 283 peut comporter en mémoire les signaux de pseudo-balise ou, en variante, recevoir, des circuits 23, 281, les signaux de balise et en modifier certains bits pour transformer ces signaux en signaux de pseudo-balise. Les bases 3-6 ou au moins celles à portée radio, reçoivent et reconnaissent les signaux de pseudo-balise et s'asservissent ainsi en fréquence de fonctionnement (émission de leurs trames) sur la base maître 1, en réémettant (flèche F5) des signaux balise en voie "0" de leur trame 73 avec un retard d'une demi-trame DECT (flèche F4) sur la réception des signaux de pseudo-balise. Les bases 3-6 ont, à cet effet, des circuits semblables aux circuits 23, 24 et 28, à la différence près que les signaux de balise et de pseudo-balise ont des rôles qui sont permutés. Les signaux de balise des bases 3-6, ainsi en phase (décalage total d'une trame) avec la trame 71 de la base maître 1, asservissent en fréquence trame, et donc synchronisent, les combinés 25-27 situés à portée de la base 3-6 considérée. Les flèches sur les symboles représentant les liaisons radio de la figure 1 représentent la propagation des signaux balise ou pseudo-balise (flèches F1 et F3 de la fig. 2).

Afin de couvrir une zone étendue, il peut être prévu que certaines des bases asservies 3-6 servent de base maître au deuxième degré pour relayer, sur une porteuse f3, les signaux balise de la base 1 vers des bases distantes, à travers d'autres bases transformées en combiné (2) pour ce qui concerne les échanges par la trame DECT. En outre, on augmente ainsi le nombre de lignes RTC 21. Certaines zones du réseau local peuvent avoir une configuration minimale, avec dans chacune une base comme celle référencée 1 commandant une base-combiné comme 2 qui sert alors uniquement de circuit de débordement vers le RTC pour la base considérée et éventuellement celles à portée radio, la fonction de synchronisation d'autres bases comme 3-6 étant ineffective.

Les trames DECT des diverses bases 1, 3-6 ou pseudo-base 2 sont ainsi toutes synchrones, ce qui permet de transférer (handover), sans défaut phonique, une communication gérée par une base à une autre base (1, 3-6).

En outre, disposant ainsi d'un réseau synchrone de bases 1, 3-6 reliées à la même base-combiné 2, cette dernière base 2 peut, comme indiqué, servir de circuit de débordement pour les liaisons avec le RTC. Ainsi, supposant le combiné 25 en liaison avec la ligne RTC 51 de la base 5, et le combiné 26 étant de même géré, à l'instant considéré, par la base 5, cette dernière peut renvoyer un appel vers le réseau RTC, provenant du combiné 26, vers la base 2, par une liaison d'interphonie ne nécessitant donc pas de codec. La base 2 prolonge alors l'appel jusqu'à la ligne RTC 21.

Les circuits 8 comportent une table 81 de localisation des divers combinés 25-27 tenue à jour par réception d'informations de localisation des combinés 25-27, reçues à travers le bus 9 et mémorisées, informations provenant des bases 1, 3-6 qui localisent les combinés 25-27 et en suivent les déplacements (roaming) d'après des émissions cycliques de ceux-ci. Un même combiné 25-27 peut être localisé par plusieurs bases 1, 3-6 et, en cas de demande d'établissement de communication par celui-ci, chaque base 1, 3-6 qui détecte cette demande la transmet aux circuits 8, qui choisissent la base 1, 3-6 qui va établir la communication demandée. Une table d'occupation 82 appartenant aux circuits 8 comporte à cet effet un état d'occupation des lignes 11,... 61 et même ici des terminaux 25-27, tenu à jour par les bases 1, 3-6 à travers le bus 9. Les circuits 8 choisissent par priorité, pour établir une communication suite à un appel d'un terminal 25-27 vers le RTC, une base 1, 3-6 dont la ligne 11, 21, ..., 61 est libre.

En cas d'appel RTC entrant, le réseau RTC laisse passer les derniers chiffres du numéro appelé (sélection directe à l'arrivée), qui sont reçus et analysés dans les circuits 8 par un circuit 83 de brassage de lignes (petit autocommutateur) reliant les lignes 11, 21, 31, 41, 51, 61, internes au réseau local, à un même nombre de lignes ou voies temporelles du réseau RTC 30. D'après l'état des tables de localisation 81 et d'occupation 82, chaque appel est renvoyé vers la ligne 11, 21, ..., 61 de l'une des bases 1-6 permettant d'atteindre, directement ou indirectement, le combiné 25-27 appelé.

Les circuits 8 consultent la table de localisation 81 et déterminent l'identité de la base 1, 3-6 à laquelle est rattaché le combiné 25-27 appelé. Les circuits 8 commandent alors le circuit de brassage 83 pour aiguiller l'appel entrant sur la ligne 51, par exemple, de la base 51 identifiée.

Si la table d'occupation 82 indique que cette ligne 51 est déjà occupée, l'appel entrant est aiguillé sur la ligne 21 de débordement. Si la ligne 21 est aussi occupée, l'appel est transféré sur la ligne (61) d'une autre base (6), pour ensuite être transféré, à travers la base-combiné 2, à la base 5 de rattachement du combiné 26 appelé.

Les explications ci-dessus restent valables dans le cas d'un appel interne entre deux combinés 25-27 de bases 1, 3-6 différentes.

Il aurait pu être prévu que le bus 9, ou tout réseau local équivalent, par exemple un réseau informatique comme l'ETHERNET et l'INTRANET, soit utilisé à la place des lignes 11, 21, ..., 61 pour relier les bases 1-6 aux circuits 8 et en particulier au circuit de brassage 83. Les circuits 8 pourraient aussi, en variante, comporter des circuits radio de combinés DECT, pour communiquer avec les bases 1, 3-6, et des circuits de base DECT pour les liaisons avec le combiné 2.

En variante, le circuit de brassage 83 est omis et les lignes 11, 21, ..., 61 sont des lignes directement reliées au RTC et déclarées comme lignes groupées dans celui-ci. Un appel RTC entrant arrive sur la première ligne libre, comme 41, et, ensuite, il est renvoyé jusqu'à la base comme 51 du combiné 25 appelé, par une liaison d'interphonie DECT à travers la base-combiné 2, qui peut exister en plusieurs exemplaires. Il peut être prévu que les appels entrants arrivent de préférence sur la (ou les) base(s) 2 qui, de par sa position centrale, est reliée directement aux bases 1, 3-6, ce qui limite l'occupation des voies temporelles pour transférer les communications jusqu'au combiné appelé 25. La ligne 21 est alors inscrite en tête de groupement.

## Revendications

1. Réseau local de radiotéléphonie comportant une pluralité de bases radio (1-6) comprenant chacune des moyens de liaison (11, 21) avec un réseau téléphonique externe (30) et des moyens radio (13) de liaison avec des combinés (25-27), caractérisé par le fait qu'une première base (2) est agencée pour fonctionner comme combiné d'une deuxième base (1) et synchroniser les autres bases (3-6) sur la deuxième base (1).

2. Réseau selon la revendication 1, dans lequel la première base (2) est agencée pour émettre, dans une voie temporelle d'une trame (71), des signaux de pseudo-balise de synchronisation des autres bases (3-6), avec un retard d'une demi-trame sur la réception de signaux de balise provenant de la deuxième base (1).

3. Réseau selon la revendication 2, dans lequel la première base (2) est agencée pour recevoir les signaux de balise sur une porteuse déterminée (f1) et pour émettre les signaux de pseudo-balise sur une autre porteuse (f2).

4. Réseau selon la revendication 3, dans lequel les autres bases (3-6) sont agencées pour émettre, dans une voie temporelle d'une trame (73), des signaux de balise de synchronisation de terminaux (25-27) avec un retard d'une demi-trame sur la réception de signaux de pseudo-balise provenant de la première base (2).

5. Réseau selon l'une des revendications 1 à 4, dans lequel il est prévu des moyens de gestion (8) reliés aux bases (1-6) par des moyens de transmission d'informations (9) et agencés pour en recevoir et mémoriser, dans une table de localisation (81), des informations de localisation des combinés (25-27) du réseau.

6. Réseau selon la revendication 5, dans lequel les moyens de gestion (8) sont agencés pour recevoir des appels entrants provenant du réseau externe (30) et pour les renvoyer, d'après l'état de la table de localisation (81), vers les moyens de liaison (11, 21) d'une des bases (1-6).

7. Réseau selon la revendication 6, dans lequel les moyens de gestion (8) sont agencés pour commander des moyens de brassage (83) reliant des lignes du réseau téléphonique externe (30) aux moyens de liaison (12) des diverses bases (1-6).

8. Réseau selon l'une des revendications 5 à 7, dans lequel les moyens (9) de transmission d'informations comprennent un réseau informatique local.

9. Base radio pour le réseau de radiotéléphonie de la revendication 1, comprenant des moyens (22) de liaison à un réseau téléphonique extérieur (30) et des moyens (23, 24) de liaison avec des combinés (25-27), caractérisée par le fait qu'elle comporte des moyens (283) d'émission et des moyens (282) de réception de signaux de balise de synchronisation.

10. Base selon la revendication 9, dans lequel les moyens (283) d'émission de signaux. de balise sont commandés par les moyens de réception (281) à travers des moyens temporisateurs (282).
